Europäisches Patentamt

European Patent Office

Office européen des brevets

(11) Publication number: **0 095 375**
**B1**

(12) **EUROPEAN PATENT SPECIFICATION**

(45) Date of publication of patent specification: **27.08.86**

(21) Application number: **83302960.6**

(22) Date of filing: **23.05.83**

(51) Int. Cl.⁴: **B 64 G 1/44**

(54) **Spacecraft solar array pointing drive.**

(30) Priority: **21.05.82 GB 8214868**

(43) Date of publication of application:
**30.11.83 Bulletin 83/48**

(45) Publication of the grant of the patent:
**27.08.86 Bulletin 86/35**

(84) Designated Contracting States:
**DE FR GB**

(56) References cited:
**EP-A-0 047 694**

(73) Proprietor: **BRITISH AEROSPACE PUBLIC
LIMITED COMPANY
100 Pall Mall
London SW1Y 5HR (GB)**

(72) Inventor: **Rees, Terence, Dr.
British Aerospace P.L.C. Argyle Way
Stevenage Hertfordshire, SG1 2AS (GB)**
Inventor: **Sheppard, Joseph Samuel
British Aerospace P.L.C. Argyle Way
Stevenage Hertfordshire, SG1 2AS (GB)**

(74) Representative: **Dowler, Edward Charles et al
British Aerospace Public Limited Company
Corporate Patents Department Brooklands Road
Weybridge Surrey, KT13 OSJ (GB)**

Courier Press, Leamington Spa, England.

# Description

The motor drive for re-aligning or pointing a spacecraft solar array should not disturb too much the position of the spacecraft itself. Accordingly, the torque and acceleration generated by the drive should not be too great having regard to the relative inertias of the craft and array.

It is known for an array drive to comprise a combination of an electrical stepper motor and a high-ratio gear box for stepping the motor speed down to the required drive speed. However, a high ratio gear box may be too heavy and complex. Also, if the motor is sized to give a torque margin over and above the highest expected friction torque opposing the motion, the effect of the high-ratio gear box is to produce too much spacecraft disturbing torque when the actual friction is less than the worst expected.

According to the present invention, there is provided a motor drive for moving a solar array relative to a spacecraft, the drive comprising a stepper motor coupled to the array via speed step-down means, and motor energisation means for supplying to the motor phase windings respective drive signals each drive signal varying between limit values through a series of intermediate values, and being synchronised relative to the other drive signals to achieve stepping of the motor mover through fractional parts of the steps which would be achieved through single step changes of the drive signals between said limit values.

For example, the motor may be a two-phase motor or a bipolar four phase motor (with two pairs of phase windings, the windings of each pair being in antiphase) and the windings of the motor may be driven by two signals varying according to sine and cosine waveforms.

For a better understanding of the invention, reference will now be made, by way of example, to the accompanying drawings, in which:—

Figure 1 is a schematic view of a solar array motor drive,

Figure 2 is a simplified electrical diagram of the drive, and

Figure 3 shows the waveforms of the drive signals for the drive.

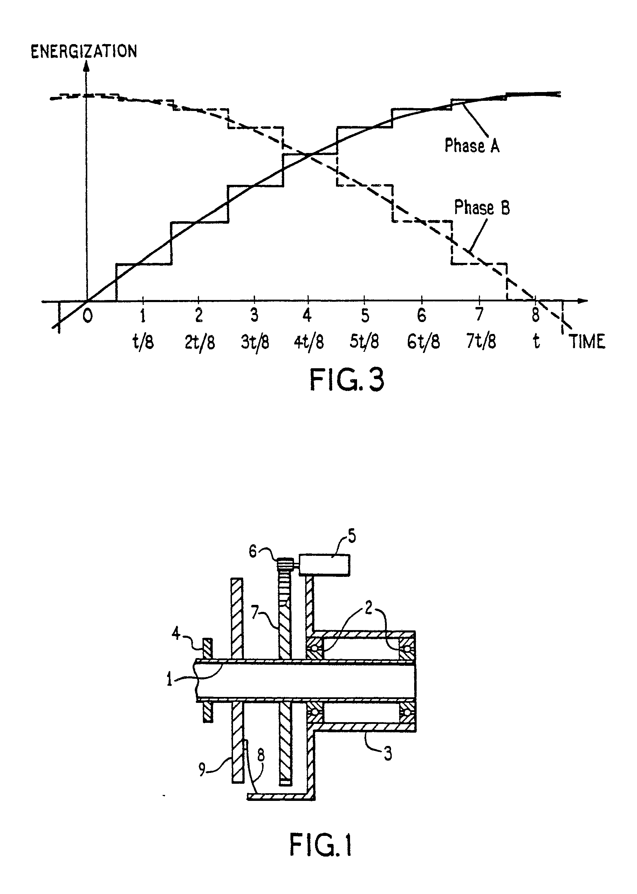

As shown in Figure 1, the drive comprises a tubular shaft 1 rotatably supported in bearings 2, which bearings are in turn supported by a mounting structure 3. The structure 3 is fixed to a spacecraft (not shown) and, at one end of the shaft 1, there is a mounting flange 4 to which a solar array (not shown) may be fixed. The structure 3 also forms a mounting for an electrical stepper motor 5, to the output shaft of which is fixed a small gear wheel 6 in engagement with a big gear wheel 7 on shaft 1 to give a 30:1 speed step-down ratio from the motor 5 to shaft 1. A spring contact 8 is supported by structure 3 in engagement with a disc slip-ring 9 on shaft 1 between gearwheel 7 and flange 4.

In the example being described, the windings (not shown) of the motor 5 are interconnected to provide a bi-polar four-phase arrangement, i.e. there are four phases A1, A2, B1 and B2 but A1 and A2 are connected in parallel antiphase with one another while B1 and B2 are connected in parallel antiphase with one another. The motor might have say eight toothed poles (not shown) and a toothed rotor (not shown) axially magnetized with toothed end caps (not shown).

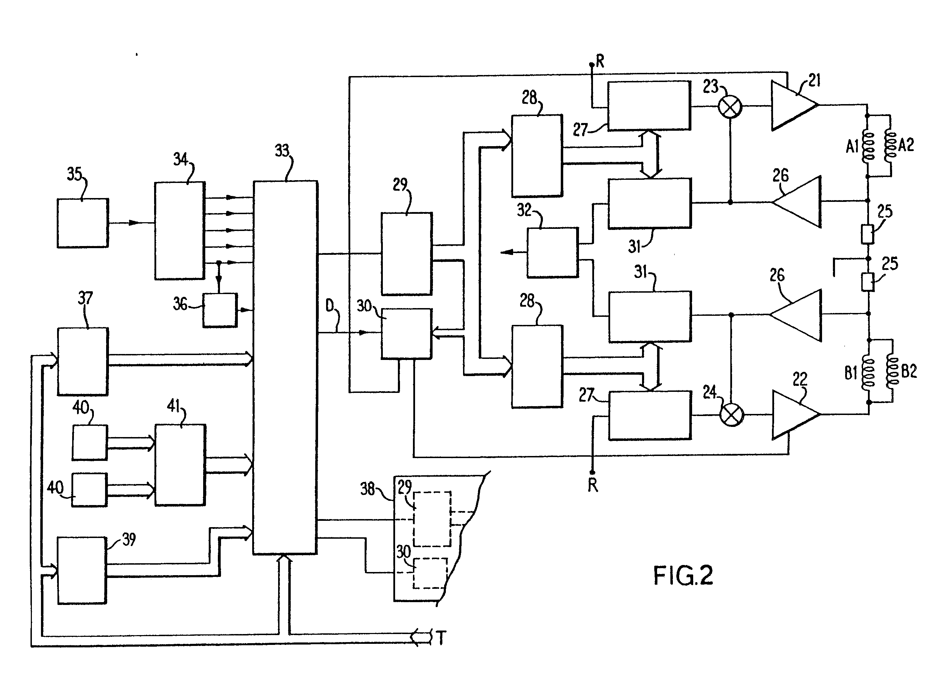

As shown in Figure 2, the phases A1 and A2 on the one hand and B1 and B2 on the other, are driven by respective bi-directional current drive amplifiers 21 and 22 which are, in turn, driven by respective error signals equal to the differences formed at respective junctions 23 and 24, between the actual and desired phase-current waveforms. For each phase, the actual current waveform is sensed by the combination of a resistor 25 connected in series with the respective phase and an amplifier 26. The desired current value is formed by a respective digital to analog converter 27 which receives as its input the content of a selected address of a respective programmable read-only memory 28, the selected address being determined by an address-counter 29 which is common to both phases. Each read-only memory 28 is pre-filled with signal values such that, as the memory addresses are stepped through, the memory 28 associated with phases A1 and A2 produces a series of output values incremented between upper and lower limits generally along a sinusoidal curve as shown in Figure 3 while the memory associated with phases B1 and B2 produces a series of values incremented between the same two limits but generally along a cosine curve, i.e. 90° out-of-phase with the curve for the A-phase memory. Some of the address-signal bits from the address-counter 29, along with a required direction of travel signal D, are used by a logic circuit 30 to form respective signals for controlling the polarity or direction of the drive currents formed by amplifiers 21 and 22.

The outputs from the read-only memories 28 are fed, as well as to the D/A converters 27, to respective similar D/A converters 31. Whereas, the converters 27 each receive a constant reference value drive signal R and supply analog outputs respectively proportioned to the product of R and the signal from the associated read-only memory, i.e. corresponding to a sine and cosine waveform respectively, the corresponding drives to the converters 31 are the actual current value signals from the amplifiers 26. Thus, the converters 31 provide $Sin^2$ and $Cos^2$ outputs respectively. These are summed and fed to a fault detector circuit 32 which checks that the sum $Sin^2\theta + Cos^2\theta$ equals unity and, if to within predetermined tolerances the sum is not unity, gives an indication that some fault has occurred in the operation of the system.

The incrementing signal for the address counter 29 and the direction of travel signal D are supplied by a logic circuit 33 which in turn, receives command information T from the spacecraft telecommunication system (not shown), a series of timing signals of different predetermined repetition rates from a divider circuit 34 acting in conjunction with a crystal clock 35, a timing signal from a timer 36, and signals from a sun-sensor logic system 37. The spacecraft for which the illustrated drive system is intended, has two solar arrays separately movable by respective motors like the motor 5. Accordingly, there is provided a further arrangement of an address-counter, read-only memories, digital to analog converters and such connected to the windings of the other motor all as described for the motor 5. This other arrangement is partly shown in Figure 2 as the block 38. This block can be controlled by the same logic circuit 33 which will then also receive an input from a sun sensor logic system 39 associated with the other solar array. If desired, the actual positions of the two solar arrays can be measured by respective position encoders 40 and these positions compared by a comparator 41 which then also supplies a control signal to logic circuit 33, the object being to allow, when desired, the maintenance of synchronism between the arrays to some predetermined tolerance. Each sun sensor logic system is also responsive to commands T from the spacecraft telecommunication system. The logic circuit 33 is operable, in association with the other parts shown, to achieve some desired pattern of control of the system as a whole. For example, it could provide a sun acquisition mode in which, with the sun outside the field-of-view of the sensors on the arrays, the logic circuit steps address-counter(s) 30 at some chosen rate, then after a predetermined time set by timer 36, steps the rate up to another of the values supplied by divider 34, and then perhaps up to another higher rate after a further time equal to the predetermined period. When the sun comes into the field-of-view of the sensors, the respective logic systems 37 and 39 provide signals to logic circuit 33 progressively indicating that the error angle between the array 'direction' and the line of sight to the sun has passed respectives ones of a series of reducing marker values, for example ±12.5°, ±4.5°, and ±0.5°. As each of these values is achieved, a slower address stepping rate is selected until, when the angle is within the tolerance defined by the smallest marker value (±0.5° in the example), the address stepping is stopped. Thus, during this acquisition phase, the speed of movement of the arrays is ramped up with time until they come near to the desired position and then ramped down in proportion to closeness to that desired position. Of course, if the sun is already within the field-of-view of the sun sensor system when the acquisition mode is begun or if a view is achieved before any of the higher step rates are started, then the logic circuit 33 will operate accordingly e.g. by only stepping up to a higher rate if the predetermined time elapses *and* the reduction of the sun/array direction error to less than the first marker value has still not been achieved. Having acquired the sun, the logic circuit may be placed in a tracking mode in which it selects for passing on to the address counter 30 a signal from divider 34 of which the frequency is appropriate to the expected rate of change of direction of the sun for the given orbit of the spacecraft. In this mode, if it is desired to maintain the arrays in synchronism, the logic circuit 33 may be responsive to detection of lack of such synchronism by the comparator 41 to increase the speed of one array for an appropriate period. It is sometimes advantageous, for offsets to be introduced between the solar array direction and the sun direction, preferably independent offsets for the two arrays. It might be desired for the direction of one array to be offset by up to say +5° from the sun direction while the other array is offset by a similar amount in the opposite sense, i.e. lagging the sun direction by up to 5°. This is easily done with illustrated system by allowing for the offsets to be stored in the sun sensor logic systems *via* the spacecraft telecommunication system.

As will be realised, to provide redundancy there would generally be at least two motors 5 arranged so that either can move the array and each motor would have a respective system for driving it.

The function of the slip-ring 9 and contact 8 is, of course, to transfer power from the array to the spacecraft.

If the motor windings were simply driven "on" and "off", either singly or in appropriate combinations, a certain size of step would be moved through by the rotor for each drive signal change. With the arrangement illustrated, each successive signal change produces a rotor movement through a "ministep" equal to a fractional part of that step size. With the waveform illustrated in Figure 3, there are eight ministeps for each full step.

The number of step values of the drive signals may be altered from that shown in Figure 3 so that, instead of eight ministeps per full step, there could be say 4, 16, 32, 64 or even more. With the 30:1 gear ratio shown in Figure 1, the drive signals varied to give 32 ministeps per full step, and a motor of which the full step dimension is 1.8°, there will be 32×30×360/1.8 ministeps for each full rotation of the shaft 1.

The variation of the winding drive signals does not have to be stepwise and the general waveform, whether or not followed stepwise, does not have to be sinusoidal. Rather any appropriate waveform, to give some desired torque profile say, may be chosen. In a general case of the illustrated system, the ratio between gears 6 and 7 would be typically less than 100:1.

**Claims**

1. A motor drive for moving a solar array relative to a spacecraft, the drive comprising a stepper motor coupled to the array *via* speed step-down means, and motor energisation means for supplying to the motor phase windings respective drive signals each drive signal varying between limit values through a series of intermediate values, and being synchronised relative to the other drive signals to achieve stepping of the motor mover through fractional parts of the steps which would be achieved through single step changes of the drive signals between said limit values.

2. A drive according to claim 1, wherein the motor is a two-phase motor or a bipolar four phase motor and the motor windings are driven by two signals varying according to sine and cosine waveforms.

## Patentansprüche

1. Motorantrieb zur Bewegung einer Solar-Anordnung relativ zu einem Raumfahrzeug, mit einem Schrittmotor, der über ein Untersetzungsgetriebe mit der Anordnung gekuppelt ist und mit einer Motorerregervorrichtung, um den Motorphasenwicklungen die jeweiligen Antriebssignale zuzuführen, wobei jedes Antriebssignal sich zwischen Grenzwerten über eine Folge von Zwischenwerten ändert und relativ zu den anderen Antriebssignalen synchronisiert wird, um eine stufenweise Bewegung des Motors über Bruchteile der Stufen zu erlangen, die über eine einzelne Stufenänderung der Antriebssignale zwischen den Grenzwerten erhalten werden könnten.

2. Antrieb nach Anspruch 1, bei welchem der Motor ein Zweiphasenmotor oder ein bipolarer Vierphasenmotor ist und die Motorwicklungen durch zwei Signale gespeist werden, die sich gemäß der Sinus- und Kosinuswellenform ändern.

## Revendications

1. Système d'entraînement par moteur pour le déplacement d'un réseau de cellules solaires par rapport à un engin spatial, ce système d'entraînement comprenant un moteur pas à pas relié au réseau via un moyen de réduction de vitesse, et un moyen d'excitation de moteur pour fournir aux enroulements de phase du moteur des signaux respectifs de commande, chaque signal de commande variant entre des valeurs limites en passant par une série de valeurs intermédiaires, et étant synchronisé vis-à-vis des autres signaux de commande de manière à obtenir une marche pas à pas du système de rouage motorisé en passant par des fractions des pas qui seraient obtenus avec des changements à pas unique des signaux de commande entre lesdites valeurs limites.

2. Système d'entraînement selon la revendication 1, où le moteur est un moteur biphasé ou un moteur bipolaire quadriphasé et les enroulements du moteur sont commandés par deux signaux variant selon des formes d'ondes sinusoïdales et cosinusoïdales.

ENERGIZATION

Phase A

Phase B

| 0 | 1 | 2 | 3 | 4 | 5 | 6 | 7 | 8 | TIME |

t/8   2t/8   3t/8   4t/8   5t/8   6t/8   7t/8   t

FIG.3

FIG.1

FIG.2

0 095 375